# EUROPÄISCHE PATENTANMELDUNG

(11) **EP 2 444 633 A2**
(43) Veröffentlichungstag der Anmeldung: **25.04.2012**
(21) Anmeldenummer: 11006763.4
(22) Anmeldetag: 18.08.2011
(51) Int. Cl.: F02C 7/36

(54) **Antriebswelle, insbesondere Radialwelle für ein Gasturbinentriebwerk, mit Faserverbundschichten**

(30) Priorität: 19.10.2010 DE 102010048926
(71) Anmelder: Rolls-Royce Deutschland & Co. KG, 158257 Blankenfelde-Mahlow (DE)
(72) Erfinder: Hechler-Srabbert, Gerald, 12101 Berlin (DE); Pabst, Alexander, 12049 Berlin (DE)
(74) Vertreter: Weber, Joachim

(57) **Zusammenfassung**

Die vorliegende Erfindung betrifft eine Antriebswelle, insbesondere Radialwelle für ein Gasturbinentriebwerk, die einen metallischen, hohlen Wellenschaft 1 mit an dessen Enden angeformten Lasteinleitungselementen 2; 10, 11 umfasst, wobei der Wellenschaft 1 ein als Halbzeug vorgefertigtes und nur zur Übertragung von Torsionslasten ausgelegtes Metallrohr 3, 9 mit gleichbleibender Wandstärke sowie eine nur zur Gewährleistung der erforderlichen Biegesteifigkeit an der Außen- und/oder Innenumfangsfläche des Metallrohres 3, 9 gehaltene Außen- oder Innenarmierung 5, 8 aus einer Faserverbundschicht 13, 13' mit in Längsrichtung der Antriebswelle orientierten Fasern umfasst, wobei die als Außenarmierung 5 dienende innere Faserverbundschicht 13 mit einer äußeren Faserverbundschicht 14 aus im Winkel von 60 bis 90° zur Längsrichtung orientierten Fasern ummantelt ist.

## Beschreibung

Die Erfindung betrifft eine schnell drehende Antriebswelle, insbesondere eine Radialwelle für ein Gasturbinentriebwerk, die einen metallischen, hohlen Wellenschaft mit an dessen Enden angeformten Lasteinleitungselementen umfasst.

Die zum Antrieb eines Generators vorgesehene Radialwelle eines Gasturbinentriebwerks ist üblicherweise als hohl gebohrtes und gehontes, metallisches Bauteil mit an den beiden Enden angeformten Lasteinleitungselementen ausgebildet. Über die - beispielsweise mit einer Verzahnung versehenen - Lasteinleitungselemente erfolgt unter Zwischenschaltung eines Getriebes die Verbindung mit dem Triebwerk bzw. dem Generator. Die Herstellung der bekannten metallischen Radialwellen für Gasturbinentriebwerke ist mit einem hohen Kostenaufwand verbunden, da deren Rohrquerschnitt zur Erzielung einer hohen Biegesteifigkeit und einer entsprechend hohen biegekritischen Drehzahl variabel ausgebildet ist und hierzu aufwändige Bohr- und Honprozesse erforderlich sind. Zur Minimierung fertigungsbedingter Unwuchten und damit verbundener Biegespannungen ist zudem eine hochpräzise und damit aufwändige Wuchtung notwendig. Darüber hinaus sind aufgrund der hohen Kosten dem oft gewünschten Einsatz von Radialwellen bei höherer Betriebsdrehzahl und/oder mit größerer Länge, und zwar bei entsprechend erhöhter Biegesteifigkeit und biegekritischer Drehzahl, Grenzen gesetzt.

Es wurde bereits vorgeschlagen, die Radialwelle von Gasturbinentriebwerken vollständig aus Faserverbundmaterial auszubilden oder in Hybridbauweise aus einem Faserverbundwerkstoffrohr mit an dessen Enden befestigten metallischen Lasteinleitungselementen zu fertigen. Aufgrund der gegenüber einer aus Metall bestehenden Radialwelle verringerten Biegesteifigkeit ist jedoch eine wirksame Erhöhung der biegekritischen Drehzahl nicht gewährleistet. Zudem führen die insbesondere im Bereich der Lasteinleitung wirksamen Torsionslasten zu kritischen Beanspruchungszuständen in dem Faserverbundwerkstoff.

Der Erfindung liegt die Aufgabe zugrunde, eine Radialwelle mit hoher Biegesteifigkeit und hoher biegekritischer Drehzahl anzugeben, die kostengünstig gefertigt werden kann und auch bei größerer Länge in einem erhöhten Drehzahlbereich betrieben werden kann.

Erfindungsgemäß wird die Aufgabe mit einer gemäß den Merkmalen des Patentanspruchs 1 ausgebildeten Radialwelle gelöst.

Vorteilhafte Weiterbildungen der Erfindung sind Gegenstand der Unteransprüche.

Der Grundgedanke der Erfindung besteht in der Entkopplung der Torsionslastübertragung und der Biegeversteifung der Antriebswelle, indem der an den Enden mit Lasteinleitungselementen versehene Wellenschaft ein als Halbzeug vorgefertigtes und nur zur Übertragung von Torsionslasten ausgelegtes Metallrohr mit gleichbleibender Wandstärke sowie eine nur zur Gewährleistung der erforderlichen Biegesteifigkeit an der Außen- oder Innenumfangsfläche des Metallrohres gehaltene Außen- oder Innenarmierung aus einer Faserverbundschicht mit in Längsrichtung der Antriebswelle orientierten Fasern umfasst, wobei die als Außenarmierung dienende Faserverbundschicht mit einer äußeren Faserverbundschicht aus im Winkel von 60 bis 90° zur Längsrichtung orientierten Fasern ummantelt ist.
Die so ausgebildete, insbesondere als Radialwelle für ein Gasturbinentriebwerk vorgesehene schnell drehende Antriebswelle kann mit geringem Kostenaufwand hergestellt werden. Die aus Faserverbundmaterial bestehende Außen- oder Innenarmierung des nur zur Drehmomentenübertragung ausgebildeten und somit schlanken Metallrohrs sorgt für eine derart hohe Biegeversteifung, dass aufgrund einer dadurch bedingten signifikanten Erhöhung der biegekritischen Drehzahl bei gleichem Drehmoment längere Antriebswellen mit höherer Betriebsdrehzahl eingesetzt werden können. Bei der Verwendung als Radialwelle ergeben sich dadurch neue Möglichkeiten der Triebwerksgestaltung.

In weiterer Ausbildung der Erfindung ist die aus axial orientierten Fasern gebildete Faserverbundschicht aus zu Halbschalen verpresstes Faserverbundmaterial ausgebildet, so dass eine hohe Faserdichte und damit eine noch höhere Biegesteifigkeit erzielt werden kann.

Zwischen dem Metallrohr und der am Metallrohr liegenden Faserverbundschicht ist eine Zwischenschicht vorgesehen, die zum Ausgleich von wärmebedingten Längsdehnungen als Gleitschicht ausgebildet ist. Die Zwischenschicht kann auch als Klebeschicht, elastische Schicht und/oder als Korrosionsschutzschicht ausgeführt sein.

Gemäß einem noch anderen Merkmal der Erfindung ist die innere Faserverbundschicht der Außenarmierung durch einen mittig am Außenumfang des Metallrohrs vorgesehenen Positionierungsring in Längsrichtung fixiert.

In weiterer Ausgestaltung der Erfindung ist die als Innenarmierung fungierende Faserverbundschicht durch beidseitig im Metallrohr angebrachte Deckel fixiert, die gleichzeitig einen Flüssigkeitstransport durch das Metallrohr verhindern und die Faserverbundschicht gegenüber äußeren Einwirkungen schützen.

Die Faserverbundschichten bestehen in vorteilhafter Ausgestaltung der Erfindung aus in eine polymere Matrix eingebetteten Glas-, Kohlenstoff-und/oder Aramidfasern.

In weiterer Ausgestaltung ist das Metallrohr als gerades oder sich konisch verjüngendes Rohr mit kreisförmigem Querschnitt ausgebildet.

Die beispielsweise mit einer Außenverzahnung versehenen Lasteinleitungselemente sind vorzugsweise separat gefertigt und durch Schweißen, insbesondere Reibschweißen mit den Enden des Metallrohrs verbunden.

Ein Ausführungsbeispiel der Erfindung wird anhand der Zeichnung, in der
- Fig. 1: einen Längsschnitt einer in Metall-Faserverbund-Hybridbauweise mit äußerer Faserverbundarmierung ausgebildeten Radialwelle für ein Gasturbinentriebwerk;
- Fig. 2: eine vergrößerte Schnittansicht eines Wandabschnitts der Radialwelle gemäß Fig. 1; und
- Fig. 3: einen Längsschnitt einer in Hybridbauweise ausgeführten Radialwelle mit innen liegender Faserverbundarmierung in einem konisch ausgebildeten Metallrohr
zeigt, näher erläutert.

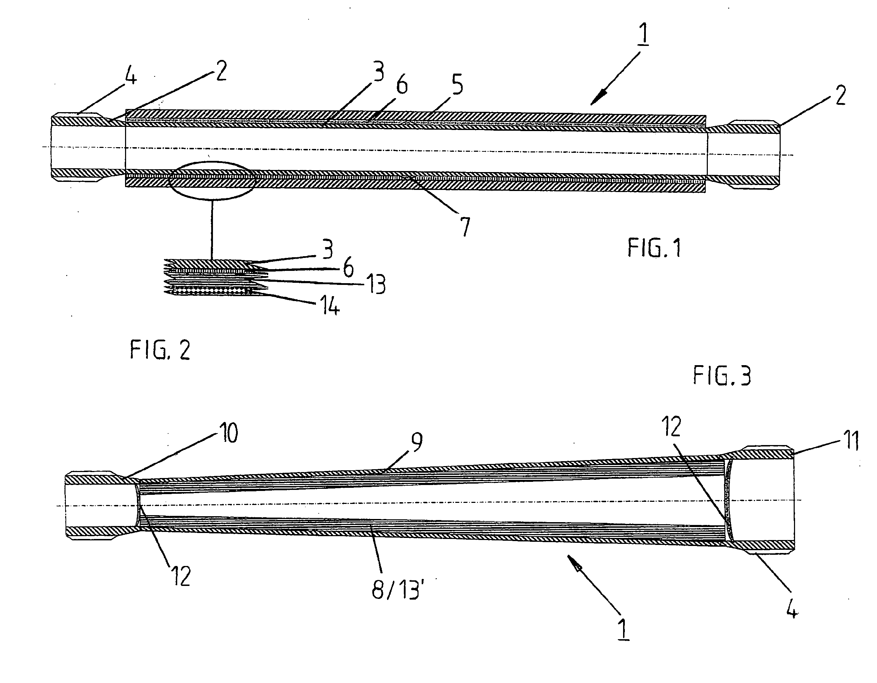

Die in Fig. 1 gezeigte Radialwelle besteht aus einem Wellenschaft 1 mit an dessen Enden ausgebildeten Lasteinleitungselementen 2. Der Wellenschaft 1 umfasst ein aus vorgefertigtem Halbzeug bestehendes Metallrohr 3 mit kreisförmigem Querschnitt, gleichbleibender Wandstärke und konstantem Durchmesser, an dessen Enden die - hier eine Außenverzahnung 4 aufweisenden - Lasteinleitungselemente 2 angeformt sind. Die separat gefertigten Lasteinleitungselemente 2 sind beispielsweise durch Reibschweißen mit dem nur zur Übertragung von Torsionslasten vorgesehenen und entsprechend schlank dimensionierten Metallrohr 3 verbunden. Es ist aber auch denkbar, dass die Lasteinleitelemente 2 integraler Bestandteil des Metallrohres sind. Die erforderliche Biegesteifigkeit des Wellenschaftes 1 wird durch eine am Außenumfang des Metallrohres 3 angebrachte Außenarmierung 5 aus einer (inneren) Faserverbundschicht 13 mit überwiegend in Längsrichtung des Wellenschaftes 1 orientierten Fasern erzielt. Die innere Faserverbundschicht 13 aus axial orientierten Fasern ist mit einer äußeren Faserverbundschicht 14 aus im Winkel von 60 bis nahe 90° orientierten Fasern ummantelt, um dadurch ein durch Biegung verursachtes radiales Aufweiten der Außenarmierung 5, das heißt der inneren Faserverbundschicht 13 zu verhindern.

Die innere Faserverbundschicht 13 besteht gemäß dem vorliegenden Ausführungsbeispiel aus zwei vorgefertigten Halbschalen (nicht dargestellt) aus Faserverbundwerkstoff, die um das Metallrohr 3 gelegt werden. Die Halbschalen aus Faserverbundwerkstoff werden in einem Pressverfahren in einer Form hergestellt, so dass ein hoher Fasergehalt und damit eine hohe Steifigkeit erzielt werden kann. Anschließend wird die äußere Faserverbundschicht 14 aufgebracht. Der Faserverbundwerkstoff besteht aus Glas-, Kohlenstoff-oder Aramidfasern, die in eine polymere, beispielsweise einen thermoplastischen oder duroplastischen Kunststoff umfassende Matrix eingebettet sind. Zwischen der Außenarmierung 5 und dem Metallrohr 3 befindet sich eine - in dem vorliegenden Ausführungsbeispiel aus PTFE-Lack bestehende - auf der Außenfläche des Metallrohrs 3 ausgebildete Zwischenschicht 6, um eine thermisch bedingte Längsdehnung des Metallrohres 3 auszugleichen. Eine beispielsweise aus einem Polymer oder Elastomer bestehende Zwischenschicht 6 kann darüber hinaus auch eine klebende oder korrosionsschützende oder elastische Wirkung aufweisen. Zur Fixierung der aus Faserverbundwerkstoff bestehenden Außenarmierung 5 ist in der Mitte des Metallrohrs 3 ein in dessen Umfangsrichtung verlaufender Positionierungsring 7 angebracht. Der zuvor geschilderte Wandaufbau eines den Wellenschaft 1 bildenden Metallrohres 3 mit Außenarmierung 5 ist in Fig. 2 in vergrößerter Darstellung wiedergegeben.

Anstelle der Außenarmierung 3 kann an der Innenumfangsfläche des Metallrohres 3 auch eine Innenarmierung 8 angebracht sein, die wie die Außenarmierung 5 - jedoch ohne die Faserverbundschicht 14- aus einer Faserverbundschicht 13 mit axial orientierten Fasern besteht.

Fig. 3 zeigt einen Wellenschaft 1 mit einer Innenarmierung 8, die an der Innenumfangsfläche eines als Halbzeug vorgefertigten, konisch verjüngten Metallrohres 9 angebracht ist. Die separat gefertigten und mit den Rohrenden verschweißten Lasteinleitungselemente 10, 11 sind aufgrund der konischen Ausbildung des Metallrohrs 9 unterschiedlich groß. Ein jeweils am Ende der Innenarmierung 8 im Innern des Wellenschaftes 1 gehaltener Deckel 12 fixiert den Faserverbundwerkstoff der Innenarmierung 8 innerhalb des konischen Metallrohres 9 und verhindert zudem einen Flüssigkeitstransport durch die Radialwelle und eine damit gegebenenfalls verbundene Beschädigung der aus der Faserverbundschicht 13' bestehenden Innenarmierung 8.

Aufgrund der Ausbildung der zuvor beschriebenen Radialwelle aus einem vorgefertigten, als Halbzeug vorliegenden einfachen Metallrohr und einer aus Faserverbundmaterial bestehenden Außen- bzw. Innenarmierung sowie der gegenüber herkömmlichen Radialwellen nicht mehr erforderlichen aufwändigen Wuchtungsmaßnahmen sind die Herstellungskosten gering. Das Metallrohr ist nur für die Übertragung der Torsionslasten ausgelegt und weist eine dementsprechend geringe Masse und einen vergleichsweise geringen Durchmesser auf, während die für eine hohe Drehzahl erforderliche Biegesteifigkeit durch die aus dem leichten Faserverbundmaterial bestehende Innen- oder Außenarmierung gewährleistet ist. Aufgrund der dadurch bedingten signifikanten Erhöhung der biegekritischen Drehzahl ist es möglich, auch längere Radialwellen kostengünstig zu fertigen und zudem bei höheren Drehzahlen zu betreiben. Beispielsweise kann eine bisher mit 15000 bis 25000 Umdrehungen/Sekunde betriebene Radialwelle von 0,5m Länge in der oben beschriebenen Ausführungsform doppelt so lang ausgebildet sein und mit einer Drehzahl von bis zu 45000 Umdrehungen pro Sekunde betrieben werden.

### Bezugszeichenliste

- 1: Wellenschaft
- 2: Lasteinleitungselemente von 3
- 3: Metallrohr von 1
- 4: Außenverzahnung von 2, 10, 11
- 5: Außenarmierung von 3
- 6: Zwischenschicht
- 7: Positionierungsring
- 8: Innenarmierung von 9
- 9: konisch verjüngtes Metallrohr
- 10: Lasteinleitungselement von 9
- 11: Lasteinleitungselement von 9
- 12: Deckel von 9
- 13, 13': innere Faserverbundschicht von 5 bzw. 8
- 14: äußere Faserverbundschicht

## Patentansprüche

1. Antriebswelle, insbesondere Radialwelle für ein Gasturbinentriebwerk, die einen metallischen, hohlen Wellenschaft (1) mit an dessen Enden angeformten Lasteinleitungselementen (2; 10, 11) umfasst, **dadurch gekennzeichnet, dass** der Wellenschaft (1) ein als Halbzeug vorgefertigtes und nur zur Übertragung von Torsionslasten ausgelegtes Metallrohr (3, 9) mit gleichbleibender Wandstärke sowie eine nur zur Gewährleistung der erforderlichen Biegesteifigkeit an der Außen-und/oder Innenumfangsfläche des Metallrohres (3, 9) gehaltene Außen- oder Innenarmierung (5, 8) aus einer Faserverbundschicht (13, 13') mit in Längsrichtung der Antriebswelle orientierten Fasern umfasst, wobei die als Außenarmierung (5) dienende innere Faserverbundschicht (13) mit einer äußeren Faserverbundschicht (14) aus im Winkel von 60 bis 90° zur Längsrichtung orientierten Fasern ummantelt ist.

2. Antriebswelle nach Anspruch 1, **dadurch gekennzeichnet, dass** die Faserverbundschicht (13) aus zu Halbschalen verpresstes Faserverbundmaterial ausgebildet ist.

3. Antriebswelle nach Anspruch 1, **dadurch gekennzeichnet, dass** zwischen dem Metallrohr (3) und der inneren Faserverbundschicht (13) eine Zwischenschicht (6) ausgebildet ist.

4. Antriebswelle nach Anspruch 3, **dadurch gekennzeichnet, dass** die Zwischenschicht (6) als Gleitschicht zum Ausgleich von wärmebedingten Längsdehnungen ausgebildet ist.

5. Antriebswelle nach Anspruch 3, **dadurch gekennzeichnet, dass** die Zwischenschicht (6) als Klebeschicht, elastische Schicht und/oder Korrosionsschutzschicht ausgebildet ist.

6. Antriebswelle nach Anspruch 1, **dadurch gekennzeichnet, dass** die innere Faserverbundschicht (13) der Außenarmierung (5) durch einen mittig am Außenumfang des Metallrohrs (3) vorgesehenen Positionierungsring (7) in Längsrichtung fixiert ist.

7. Antriebswelle nach Anspruch 1, **dadurch gekennzeichnet, dass** die als Innenarmierung (8) fungierende Faserverbundschicht (13') durch beidseitig im Metallrohr (3, 9) angebrachte Deckel (12) fixiert ist, die gleichzeitig einen Flüssigkeitstransport durch das Metallrohr verhindern und die Faserverbundschicht (13') gegenüber äußeren Einwirkungen schützen.

8. Antriebswelle nach Anspruch 1, **dadurch gekennzeichnet, dass** die Faserverbundschichten (13,13', 14) aus in eine polymere Matrix eingebetteten Glas-, Kohlenstoff- und/oder Aramidfasern bestehen.

9. Antriebswelle nach Anspruch 1, **dadurch gekennzeichnet, dass** das Metallrohr (3, 9) als gerades oder sich konisch verjüngendes Rohr mit kreisförmigem Querschnitt ausgebildet ist.

10. Antriebswelle nach Anspruch 1, **dadurch gekennzeichnet, dass** separat gefertigte Lasteinleitungselemente (2; 10, 11) durch Schweißen mit den Enden des Metallrohrs verbunden sind.
